# EUROPEAN PATENT SPECIFICATION

(11) **EP 2 096 845 B1**
(45) Date of publication and mention of the grant of the patent: **13.10.2010**
(21) Application number: 09162878.4
(22) Date of filing: 13.01.2006
(51) Int. Cl.: H04M 1/725, H04W 76/06

(54) **Plural wirelessly connected devices with user alarm if the wireless connection is lost or endangered**
Mehrere drahtlos verbundene Vorrichtungen mit Benutzeralarm, wenn die drahtlose Verbindung verloren geht oder gefährdet ist
Plusieurs dispositifs connectés sans fil avec une alarme utilisateur si la connexion sans fil est perdue ou compromise

(43) Date of publication of application: 02.09.2009
(62) Divisional of application: 06250169.7
(73) Proprietor: RESEARCH IN MOTION LIMITED, Waterloo, Ontario N2L 3W8 (CA)
(72) Inventor: Brown, Michael, Kitchener Ontario N2M 2Z2 (CA); Adams, Neil, Waterloo Ontario N2K 4EA (CA); Little, Herbert, Waterloo Ontario N2T 2V8 (CA); Totzke, Scott, Waterloo Ontario N2K 3Y5 (CA)
(74) Representative: Howson, Richard G.B.

(56) References cited:
- EP-A- 1 164 555
- EP-A- 1 534 030
- DE-A1- 19 941 580
- GB-A- 2 394 585
- US-B1- 6 614 350

## Description

### BACKGROUND

### 1. Technical Field

This specification generally relates to plural wirelessly connected devices, at least one of such devices being portable -- and possibly both or all such devices being portable.

### 2. Description of Related Art

It is now becoming commonplace for portable electronic devices to be wirelessly connected with other (portable or non-portable) electronic devices. For example, using Bluetooth technology, short range RF wireless communication links may be established between related devices (e.g., between a cellular telephone and its earpiece/microphone assembly that may be configured to mount on a user's ear or the like). Infrared and other types of short range wireless communication links are, of course, also well known in the art between related electronic devices.

Some such cooperating devices provide security features to guard against unauthorized usage of one or both of the cooperating wirelessly-connected devices. For example, a smart card reader may include cryptographic security information (on an inserted smart card) associated with an authorized user. The smart card reader with a cryptographic/security smart card connected therein may be sufficiently small to be carried at all times on the person authorized to use some other associated device (e.g., a portable communication device such as a cell phone, wireless communication device or the like). In such situations, the protected device may be configured to lock up, shut down, or otherwise become disabled if its connection link with the authorizing smart card reader is broken. While this does provide needed security, it can also cause a nuisance (e.g., if a user forgetfully leaves one of the protected devices on a restaurant table, airplane, car, etc. and then walks out of range, the authorizing security communication link is broken). Even if the authorized user later remembers the forgotten device and

comes back to get it, once having breached security protocols, re-establishing authorized use may involve additional effort and/or time.

One prior approach towards enabling/disabling an electronic device display based upon separation between a wirelessly linked pc and a remote electronic device is described at US Patent No. 6,594,762. Here, the display of a personal computer is enabled only if an authorized remote user device is within a relatively near distance or proximity to the personal computer. However, this simply illustrates the problem described above where a user may forgetfully break the wireless communication link without intending to do so -- and then suffer adverse consequences. It offers no user warning alarm if the link is broken or endangered.

GB-A-2 394 585 discloses an apparatus for alerting the user to the removal of an item such as an umbrella on mobile telephone or to the disappearance of a small child or a pet, comprises a transmitter, a receiver, and an alarm. The apparatus is arranged as a primary unit, preferably forming part of a watch, cooperating with a secondary unit attached to the item. One or each unit transmits a signal which is received by the other unit and one or each unit sounds an alarm when the signal is interrupted. Preferably, several secondary units may be controlled by one programmable primary unit, and each unit has an individual identity so that the primary unit reacts to the absence of any of the recognised secondary units. The secondary units may comprise resonant or RFID tags and means for recognising a plurality of primary units.

### BRIEF SUMMARY

We now provide a user alarm if a wireless connection between related devices is lost or endangered.

According to a first aspect of the present invention, there is provided a system as defined in claim 1 of the appended claims.

According to another aspect of this invention, there is provided a method as defined in claim 10.

For example, if one is using a smart card reader with a portable wireless communication device for access control, if the smart card reader and the wireless

communication device are separated beyond usable wireless link range, then the wireless communication device will lock up. However, as a user, it would be a great improvement to know about this when it happens so that the situation can be rectified (or perhaps even prevented if a warning signal is given in advance of actual link loss).

For example, if one forgetfully leaves the smart card reader in a restaurant, a user alarm can provide immediate notification that the smart card reader was forgotten while it is still convenient and timely to go back and retrieve it from the restaurant. This is considerably better than perhaps discovering an hour or so later that the wireless communication device is locked when one next goes to use it.

In the exemplary embodiment, a wireless communication device (and quite possibly the smart card reader itself) monitors a Bluetooth wireless connection with a smart card reader access control device. If it is determined that the connection has been broken (or is endangered), then the user is notified with an attention-getting alarm. For example, an audible beep or ringtone may be used to audibly alert the user or tactile senses may be used via a vibrator output or other types of alarms such as a visual alarm like a flashing LED or LCD might be used.

Preferably, the type of alarming notification may be selectively controlled by the user who may be given an option (e.g., via an existing user profile application) to specify the desired type of alarm notification. The type of notification could even be automatically changed in response to sensed changes in a current user profile (e.g., if the user selects a vibrator output for incoming message notifications, then a vibrator alarm output could also be automatically chosen).

In addition, if the security device (e.g., smart card reader) is outfitted with sufficient hardware (e.g., an audible speaker, tactile vibrator or flashing light), it could also be programmed to provide an alarm notification to the user such that if the situation is reversed (e.g., the wireless communication device is forgetfully left at the restaurant), then the user could also receive an alarm notification to permit quick and convenient rectification of the situation.

There are a number of wireless link monitoring techniques that may be employed. To enhance security features, if a cryptographically secure "heartbeat" is available on the link, then such a "secure" heartbeat may be monitored and one or a number of missing secure heartbeats would then be interpreted as a broken or endangered link such as to generate a suitable alarm. If a secure heartbeat signal is not present (or if for some reason it is not desired to monitor the secure heartbeat), then typically another non-secure (possibly low level, infrequently occurring) link heartbeat may be monitored to ascertain continued viability of the wireless link. Still further, or alternatively, signal power on the link may be monitored so as to detect when it passes below one or more thresholds indicating that the link is either endangered or no longer useful (i.e., broken).

In exemplary embodiments herein described, the user is given an attention-getting signal (e.g., audible, tactile or visual) that is not likely to be ignored or unnoticed when the two wirelessly-connected devices lose their connection (or the connection is endangered). In one exemplary embodiment, both devices connected by the monitored wireless link are portable. However, it is also possible that our alarming techniques could be utilized to monitor wireless communication links between one or more portable devices and one or more non-portable devices.

The described embodiments may be realized in hardware, software or a combination of hardware and software and provide a method for monitoring a wireless connection between plural devices and generating a user alarm if the wireless connection is lost or endangered. The exemplary embodiments are realized, at least in part, by executable computer program code which may be embodied in physical digital memory media.

### BRIEF DESCRIPTION OF THE DRAWINGS

These and other objects and advantages of this invention will be more completely understood and appreciated by careful study of the following more detailed description of at least one exemplary embodiment in conjunction with the accompanying drawings, in which:
FIG. **1** is an overall system wide schematic view of an exemplary wireless email communication system incorporating a mobile wireless communication device providing a user alarm if a wireless connection to an associated smart card reader is lost or endangered;
FIG. **2** is an abbreviated schematic diagram of hardware typically included within an exemplary mobile wireless communication device of the type shown in FIG.**1**;
FIGS. **3A** and **3B** provide an exemplary abbreviated schematic flow diagram of computer software (i.e., program logic) that may be utilized in the mobile wireless communication device(s) of FIG. **1** to monitor a wireless connection and to provide a user alarm; and
FIGS. **4A** and **4B** provide an exemplary abbreviated schematic flow diagram of computer software (i.e., program logic) that may be utilized in the mobile wireless communication device(s) of FIG. 1 to enable a user to set personal profile preferences for the type of connection monitor and/or user alarm.

### DETAILED DESCRIPTION OF EXEMPLARY EMBODIMENTS

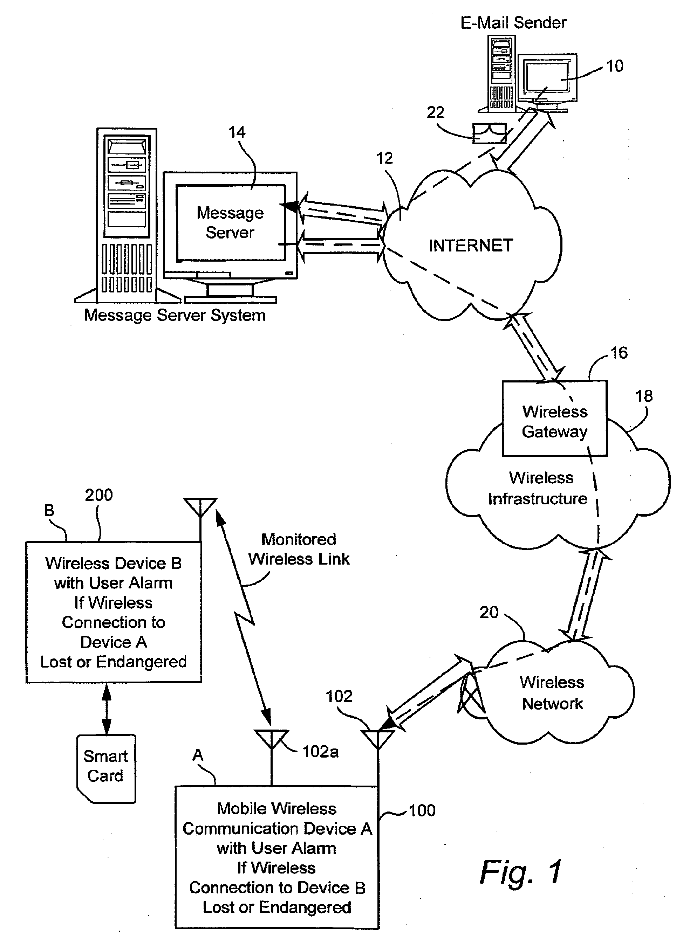

FIG. **1** is an overview of an exemplary communication system in which a wireless communication device **100** may be used. One skilled in the art will appreciate that there may be hundreds of different system topologies. There may also be many message senders and recipients. The simple exemplary system shown in FIG. **1** is for illustrative purposes only, and shows perhaps the currently most prevalent Internet email environment.

FIG. **1** shows an email sender **10,** the Internet **12,** a message server system **14**, a wireless gateway **16,** wireless infrastructure **18,** a wireless network **20** and a mobile communication device **100.**

An email sender **10** may, for example, be connected to an ISP (Internet service Provider) on which a user of the system has an account, located within a company, possibly connected to a local area network (LAN), and connected to the Internet **12,** or connected to the Internet **12** through a large ASP (application service provider) such as America Online™ (AOL). Those skilled in the art will appreciate that the systems shown in FIG 1 may instead be connected to a wide area network (WAN) other than the Internet, although email transfers are commonly accomplished through Internet-connected arrangements as shown in FIG. 1.

The message server **14** may be implemented, for example, on a network computer within the firewall of a corporation, a computer within an ISP or ASP system or the like, and acts as the main interface for email exchange over the Internet **12.** Although other messaging systems might not require a message server system **14,** a mobile device **100** configured for receiving and possibly sending email will normally be associated with an account on a message server. Perhaps the two most common message servers are Microsoft Exchange™ and Lotus Domino™. These products are often used in conjunction with Internet mail routers that route and deliver mail. These intermediate components are not shown in FIG. **1****,** as they do not directly play a role in the invention described below. Message servers such as server **14** typically extend beyond just email sending and receiving; they also include dynamic database storage engines that have predefined database formats for data like calendars, to-do lists, task lists, email and documentation.

The Wireless gateway **16** and infrastructure **18** provide a link between the Internet **12** and wireless network **20.** The wireless infrastructure **18** determines the most likely network for locating a given user and tracks the users as they roam between countries or networks. A message is then delivered to the mobile device **100** via wireless transmission, typically at a radio frequency (RF), from a base station in the wireless network **20** to the mobile device **100.** The particular network **20** may be virtually any wireless network over which messages may be exchanged with a mobile communication device.

As shown in FIG. **1****,** a composed email message **22** is sent by the email sender **10**, located somewhere on the Internet **12.** This message **22** typically uses traditional Simple Mail Transfer Protocol (SMTP), RFC 822 headers and Multipurpose Internet Mail Extension (MIME) body parts to define the format of the mail message. These techniques are all well known to those skilled in the art. The message **22** arrives at the message server **14** and is normally stored in a message store. Most known messaging systems support a so-called "pull" message access scheme, wherein the mobile device **100** must request that stored messages be forwarded by the message server to the mobile device **100.** Some systems provide for automatic routing of such messages which are addressed using a specific email address associated with the mobile device **100.** In a preferred embodiment, messages addressed to a message server account associated with a host system such as a home computer or office computer which belongs to the user of a mobile device **100** are redirected from the message server **14** to the mobile device **100** as they are received. Messages will typically be encrypted from sender to receiver by utilizing a key that is unique to a given device. Examples of two commonly used methods are the Data Encryption Standard (Triple - DES) and the Advanced Encryption Standard (AES).

Regardless of the specific mechanism controlling forwarding of messages to mobile device **100 ,** the message **22,** or possibly a translated or reformatted version thereof, is sent to wireless gateway **16.** The wireless infrastructure **18** includes a series of connections to wireless network **20.** These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex™ Radio Network and the DataTAC™ Radio Network. Examples of older voice-centric data networks include Personal Communication Systems (PCS) networks like GSM, and TDMA systems.

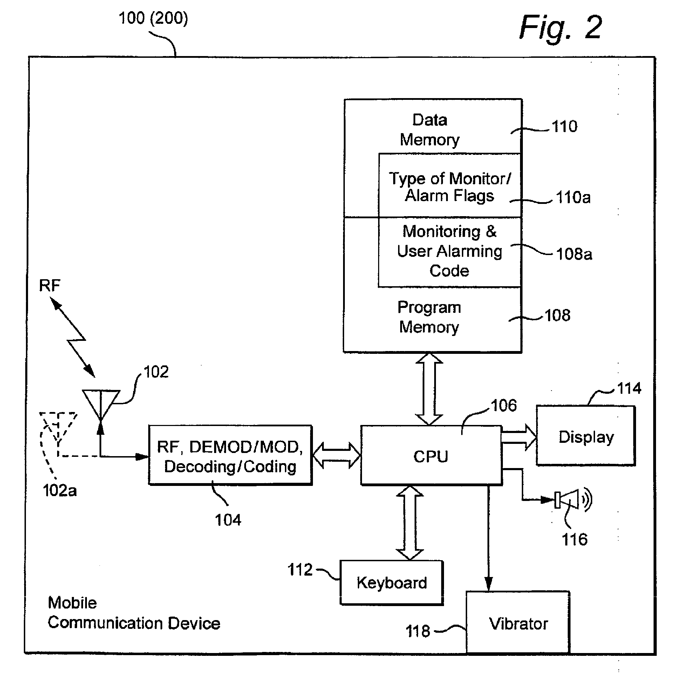

As depicted in FIG. **2****,** mobile communication device **100** includes a suitable RF antenna **102** for wireless communication to/from wireless network **20.** Conventional RF, demodulation/modulation and decoding/coding circuits **104** are provided. As those in the art will appreciate, such circuits can involve possibly many digital signal processors (DSPs), microprocessors, filters, analog and digital circuits and the like. However, since such circuitry is well known in the art, it is not further described.

The mobile communication device **100** will also typically include a main control CPU 106 which operates under control of a stored program in program memory **108** (and which has access to data memory **110).** CPU **106** also communicates with a conventional keyboard **112,** display **114** (e.g., an LCD) an audio transducer or speaker **116** and a vibrator transducer **118.** A portion of data memory **110a** is available for storing flags indicating the type of link monitoring and/or user alarms to be used. Suitable computer program executable code is stored in portions of program memory **108a** to constitute the program logic for effecting link monitoring and the issuing of a suitable user alarm if the monitored link is endangered or lost.

As indicated in parenthesis at FIG. **2****,** the mobile communication device depicted may also generally describe the smart card reader **200** (wireless device B shown in FIG. **1** and wirelessly linked to the mobile communication device **100**). Of course, the wireless device **200** would also include a smart card connection interface port to CPU **106.** Due to the relatively smaller size of a typical smart card reader **200,** the user interface may comprise only a single button, one or more LED lights and/or a relatively small status display. Preferably, in the exemplary embodiment, the smart card reader **200** will also include a speaker **116** and/or vibrator **118** if the smart card reader **200** is to be provided with a user alarm feature (e.g., a flashing LED). As will be recognized, the user alarm herein described may be provided in either wireless device **100** or wireless device **200** or in both as may be desired for a particular application.

As depicted in dotted lines at FIG. **2****,** a separate antenna **102a** may be provided for the monitored wireless link (the main antenna 102 being utilized perhaps at different frequency bands and/or modes of RF communication to provide the main functional wireless communication link to network **20** as depicted in FIG. 1). As those in the art will appreciate, the usual Bluetooth link (if that happens to be employed for the monitored wireless link) may utilize an antenna and RF processing circuits that are in common usage for other purposes. Alternatively, antenna/RF processing circuits dedicated to the Bluetooth (or other monitored wireless link) may be additionally provided as will be apparent to those in the art.

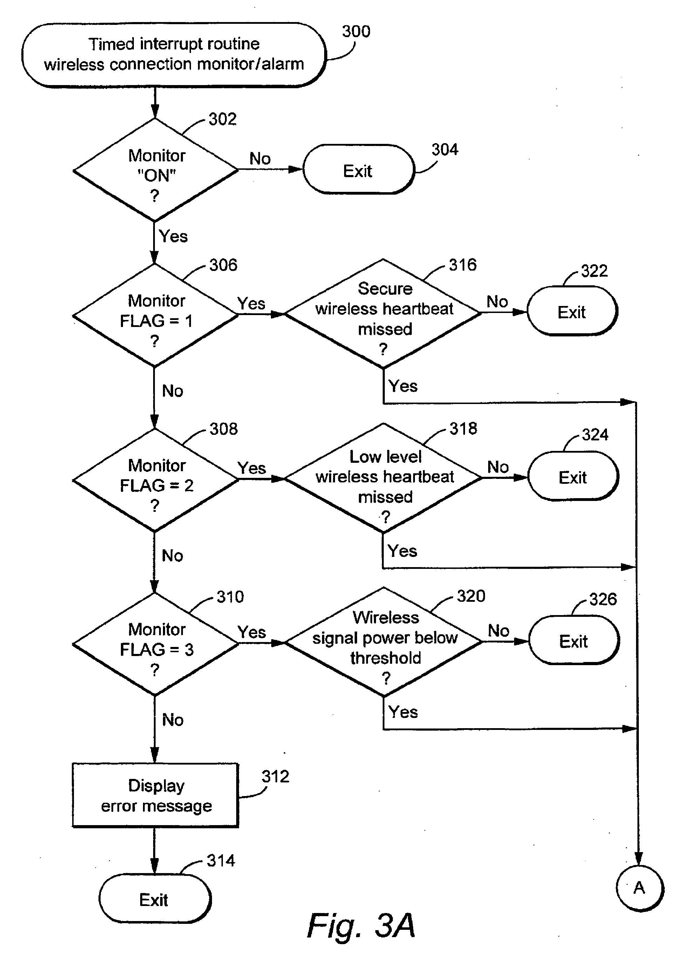

A timed interrupt routine for monitoring the wireless connection and generating an alarm if appropriate is depicted at FIGS. **3A-3B****.** The timed interrupt routine **300** may be entered relatively infrequently thus minimizing extra processing load on the CPU **106.** For example, some typical "heartbeat" signals of an operating wireless link may only occur relatively infrequently (perhaps only once every 30 seconds or so). This may be especially true for "secure" heartbeats which require cryptographic processing. Accordingly, the monitoring function need not be performed any more frequently than the expected occurrences of the monitored link characteristic.

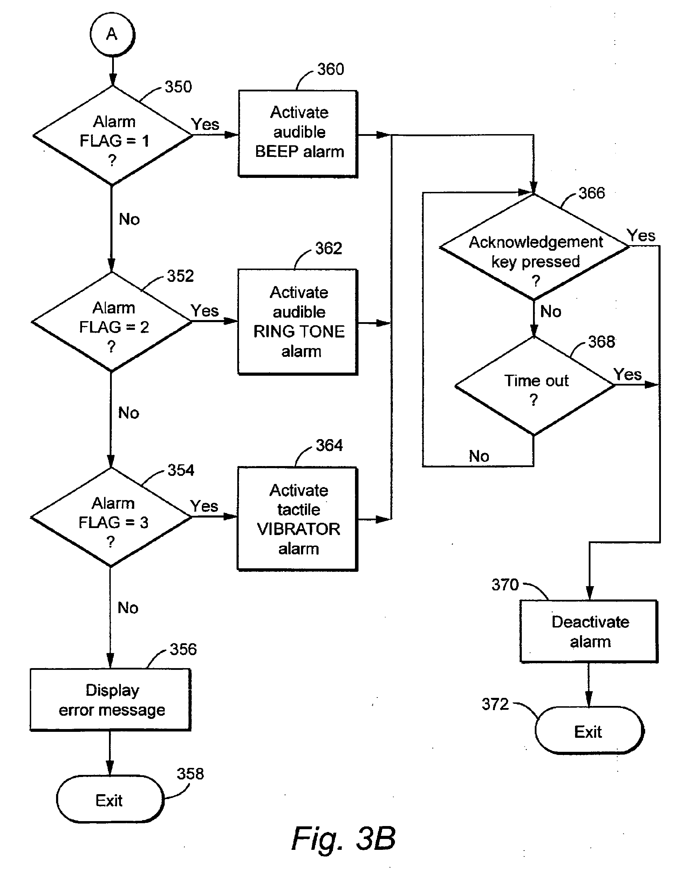

After entry to the timed interrupt routine at **300,** a test is made at **302** to see if the monitoring function is currently "ON". If not, then exit is taken at **304.** However, if the monitoring function is "ON", then tests are made successively at **306, 308** and **310** to determine the value of the monitor flag (indicating the type of monitoring to be conducted). If the monitoring flag does not have an expected value, then an error message is displayed at **312** and the routine is exited at **314.** However, if the monitoring flag has an expected value, then the link characteristic associated with the flag value is tested for at **316, 318** and **320** respectively. If no problem is found, then the routine is merely exited at **322, 324** and **326** respectively. However, if a problem is discovered, then the routine passes control to a series of alarm flag tests at **350, 352** and **354** (shown in FIG. **3B**). If no expected alarm flag value is detected, then an error message is displayed at **356** and exit is taken at **358.** However, if an expected alarm flag value is detected, then a branch is taken to the appropriate alarm activation module **360, 362** and **364** so as to activate either an audible beep alarm (if the flag value is 1) or audible ringtone alarm (if the flag value is 2) or a tactile vibrator alarm (if the alarm value is 3). If a visible flashing light type of alarm is implemented, then a corresponding flag value (e.g., 4) for that would also be checked and, if appropriate, the alarm light would be activated. Once the alarm has been activated, then control is passed to a timing loop **336, 368** waiting for an acknowledgement key to be pressed at **366** or for a time-out condition at **368** before the alarm is deactivated at **370** and exit is taken at **372.**

As explained above, an exemplary timed interrupt routine for monitoring the wireless connection and generating an alarm if appropriate is schematically depicted in abbreviated form at FIGS. **3A-3B****.** This exemplary timed interrupt may include any desired number of different types of checks on the monitored connection. The exemplary monitored secure wireless heartbeat may typically be at the application layer of the wireless communication device (e.g., implemented as a timer). The operating system may be programmed to notify the application every N minutes to send a ping to the associated smart card reader. If the application does not receive a recognizable reply to such ping within a specified period of time, the connection may be assumed lost (or endangered) and may be closed. Similarly, the smart card reader may be programmed to close the connection from its end if it does not receive recognizable communication from the wireless communication device after N minutes. A monitored low level wireless heart beat may similarly involve a periodic non-secure low level ping communication. A monitored wireless signal power vis-à-vis a specified level may similarly involve detection (on either end) of an out of range (or endangered) situation (e.g., where successful communication takes excessive time because the RF signal is relatively weak and thus introduces numerous detected communication errors necessitating excessive retries to communicate a given packet of digital data). When the number of retries required becomes excessive (i.e., beyond a specified limit), the connection may be considered endangered or broken (and then possibly dropped).

Since those in the art should already be acquainted with the existence of a secure wireless heartbeat or other low level wireless heartbeats and/or with a monitoring of wireless signal power passing below some threshold, it is not believed necessary to further describe the details of such monitoring. Instead, the final testing for the absence of some expected characteristic feature of the monitored wireless link is simply depicted in abbreviated schematic form at **316, 318** and **320** respectively.

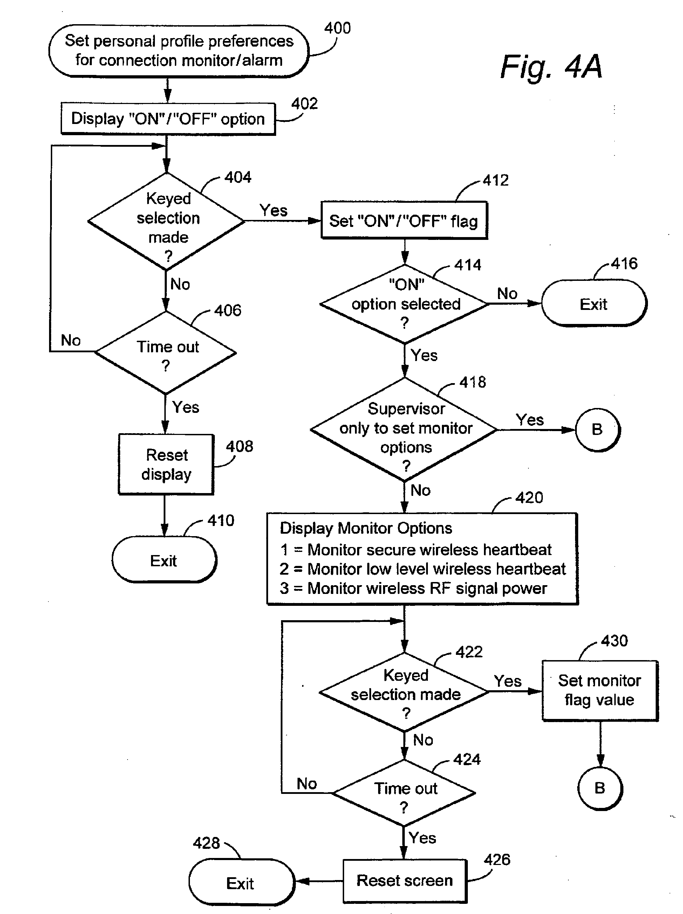

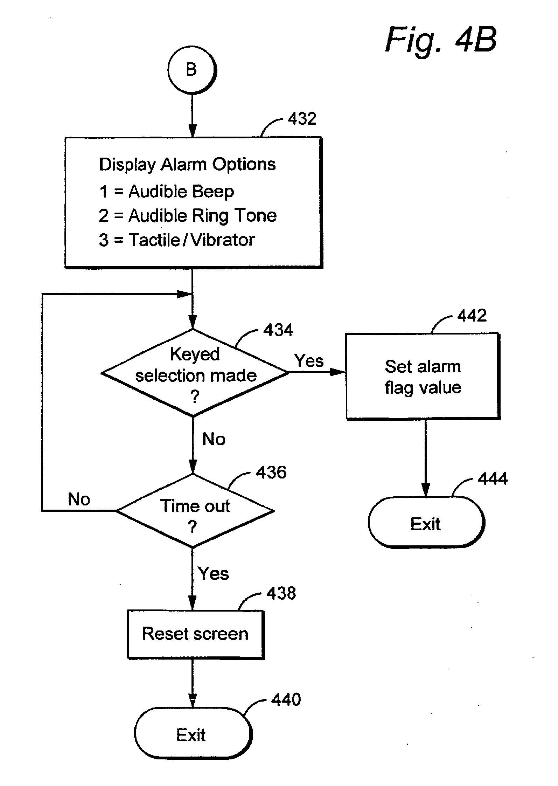

One possible program logic for setting personal profile preferences for such monitoring and/or alarming features (i.e., the flag values discussed in connection with FIGS. **3A** and **3B**) is depicted at FIGS. **4A** and **4B****.** Here, if the routine is entered at **400,** then an "ON"/"OFF" option is displayed at **402** and a key selection/time-out loop is entered at **404, 406** for the user to make a selection. If no selection is made within the allotted time, then the display is reset at **408** and exit is taken at **410.** However, if the user makes a keyed selection, then the "ON"/"OFF" flag is set appropriately at **412.** If the "ON" option has not been selected, as tested at **414,** then exit is taken at **416.** If the "ON" option has been selected, then a test is made at **418** to see if the system has been configured (e.g., via a downloaded IT Policy set at the enterprise administrative level) such that only a supervisor is permitted to set the options for monitoring the wireless link. If so, then control is transferred to the display and setting of alarm options by the user as depicted in FIG. **4B****.** However, if the user is permitted to set monitoring options, then those monitoring options are displayed at **420** (flag value 1 for monitoring secure wireless heartbeat, flag value 2 for monitoring non-secure wireless heartbeat and flag value 3 for monitoring wireless RF signal power). A key selection/time-out loop is then entered at **422, 424.** If no selection is made by the user within the available time, then the screen is reset at **426** and exit is taken at **428.** However, if the user has timely made a selection among the displayed options, then the monitor flag value is appropriately set at **430** before control is passed to the alarm option module of FIG. **4B****.**

In FIG. **4B****,** the alarm options for the user to select are displayed at **432** (flag value 1 equals audible beep, flag value 2 equals an audible ringtone, and flag value 3 equals a tactile/vibrator alarm). A user key selection/time-out loop is then entered at **434, 436.** If the user fails to make an appropriate selection within the allotted time, then the screen is reset at **438** and exit is taken at **440.** However, if the user makes an appropriate selection within the allotted time, then the alarm flag is appropriately set at **442** before the routine is exited at **444.** As will be appreciated, another option (e.g., flag value 4) for selecting a visual flashing light type of alarm may also be provided.

While the above has been described in connection with presently preferred exemplary embodiments, those skilled in the art will recognize that various changes and modifications may be made to the exemplary embodiments while yet retaining many of their novel features and advantages. Accordingly, all such variations and modifications are intended to be included within the scope of the appended claims.

An alternative arrangement useful for understanding the invention provides a portable wireless user communication device capable of being wirelessly coupled to a second device via a wireless link which provides a detectable characteristic while the link is operatively established, said portable wireless user communication device comprising:
a wireless link monitor which detects said characteristic; and
a user alarm which signals a user of said communication device in response to an output of the wireless link monitor representing impairment of the wireless link.

Optionally, the user alarm is of a type selected by the user.

Optionally, the user alarm type is user selectable from among a group of types including: (a) audible beep, (b) audible ringtone, (c) vibrator and (d) visual flashing light.

Optionally, the detectable characteristic is selectable from a group including:
(a) a secure heartbeat signal;
(b) a non-secure heartbeat signal; and
(c) wireless link signal power dropping below a threshold level.

The portable wireless user communication device may be in combination with said second device wherein said second device is also portable and may comprise:
a wireless link monitor which detects a detectable characteristic of said operatively established wireless link; and
a user alarm which signals a user of the second device in response to an output of the wireless link monitor in said second device representing impairment of the wireless link.

Another alternative arrangement provides a method for operating a portable wireless user communication device capable of being wirelessly coupled to a second device via a wireless link which provides a detectable characteristic while the link is operatively established, said method comprising:
monitoring a wireless link by detecting said characteristic; and
issuing a user alarm signaling a user of said communication device in response to an output of the wireless link monitor representing impairment of the wireless link.

Optionally, the user alarm is of a type selected by the user.

Optionally, the user alarm type is user selectable from among a group of types including: (a) audible beep, (b) audible ringtone, (c) vibrator and (d) visual flashing light.

Optionally, the detectable characteristic is selectable from a group including:
(a) a secure heartbeat signal;
(b) a non-secure heartbeat signal; and
(c) wireless link signal power dropping below a threshold level.

Optionally, the method may further comprise, in said second device:
also monitoring said wireless link by detecting a detectable characteristic of said operatively established wireless link; and
issuing a user alarm from the second device which signals a user of the second device in response to an output of the wireless link monitor in said second device representing impairment of the wireless link.

A further alternative arrangement provides a digital computer program storage medium storing a computer program for controlling, when executed, the method of operation of a portable wireless user communication device capable of being wirelessly coupled to a second device via a wireless link which provides a detectable characteristic while the link is operatively established, said method comprising:
monitoring a wireless link by detecting said characteristic; and
issuing a user alarm signaling a user of said communication device in response to an output of the wireless link monitor representing impairment of the wireless link-Optionally, the user alarm is of a type selected by the user.

Optionally, the user alarm type is user selectable from among a group of types including: (a) audible beep, (b) audible ringtone, (c) vibrator and (d) visual flashing light.

Optionally, the detectable characteristic is selectable from a group including:
(a) a secure heartbeat signal;
(b) a non-secure heartbeat signal; and
(c) wireless link signal power dropping below a threshold level.

The computer program storage medium may be for further controlling, when executed, a method of operating said second device, said method of controlling said second device comprising:
also monitoring a wireless link monitor which by detecting a detectable characteristic of said operatively established wireless link; and
issuing a user alarm from the second device which signals a user of the second device in response to an output of the wireless link monitor in said second device representing impairment of the wireless link.

Yet another alternative arrangement provides a pair of portable devices which are capable of being wirelessly interconnected to each other via an RF link which includes a detectable characteristic, at least one of said devices comprising:
a monitor which detects the absence or impairment of said detectable characteristic; and
a user alarm which signals a user of the device of such detected absence or impairment of said detectable characteristic.

Optionally, both of said devices include a monitor and user alarm to signal the user of said devices that the wireless connection therebetween is lost or in danger of being lost.

Optionally, the user alarm is of a type selected by the user.

Optionally, the user may select an alarm type from a group of types including: (a) audible beep, (b) audible ringtone, (c) vibrator and (d) visual flashing light.

Optionally, the detectable characteristic of the RF link is of a selected type.

Optionally, the detectable characteristic may be selected from a group of characteristics including:
(a) a secure heartbeat signal;

## Claims

1. A system comprising:
a first portable device;
a second portable device adapted for wirelessly connecting to said first portable device on a wireless link, said second portable device including:
a second-device main control CPU (100-106) configured to:
sense a change in a user profile, wherein said user profile specifies a notification type;
select an alarm type based on said notification type;
monitor a first heartbeat signal on said wireless link, said first heartbeat signal periodically transmitted by said first portable device;
detect absence of said first heartbeat signal; and
responsive to said detecting, generating output representative of said absence of said first heartbeat signal; and
a second-device alarm generating component (100-116, 100-118) configured to:
receive said output representative of said absence of said first heartbeat signal; and
generate, responsive to said receiving, a second-device user alarm, said user alarm being of said alarm type.

2. The system of claim 1 wherein said selecting said alarm type based on said notification type alarm type comprises selecting from a group of alarm types, said group including:
(a) an audible beep;
(b) an audible ringtone;
(c) a vibration; and
(d) a visual signal.

3. The system of claim 1 wherein said second-device main control CPU (100-106) is configured to set an alarm type flag responsive to said selecting said alarm type based on said notification type.

4. The system of claim 3 wherein said second-device alarm generating component (100-116, 100-118) is further configured to determine a value for said alarm type flag before generating said second-device user alarm.

5. The system of claim 2 wherein said first portable device comprises:
a first-device main control CPU (200-106) configured to:
monitor a second heartbeat signal on said wireless link, said second heartbeat signal periodically transmitted by said second portable device;
detect absence of said second heartbeat signal; and
responsive to said detecting said absence of said second heartbeat signal, generating output representative of said absence of said second heartbeat signal; and
a first-device alarm generating component (200-116, 200-118) configured to:
receive said output representative of said absence of said second heartbeat signal; and
generate, responsive to said receiving said output representative of said absence of said second heartbeat signal, a first-device user alarm.

6. The system of claim 5 further comprising, at said first device, receiving an indication of a user selection for an alarm type for said first-device user alarm.

7. The system of claim 6 wherein said indication of said user selection specifies an alarm type from the group of alarm types.

8. The system of claim 6 wherein said first-device main control CPU (200-106) is configured to set an alarm flag type responsive to said receiving said indication of said user selection for said alarm type for said first-device user alarm.

9. The system of claim 8 wherein said first-device alarm generating component (200-116, 200-118) is configured to determine a value for said alarm flag before said generating said first-device user alarm.

10. A method of providing a connection status indication, at a first device, for a wireless link to a second device, said method comprising;
sensing a change in a user profile, wherein said user profile specifies a notification type;
selecting an alarm type based on said notification type;
monitoring a heartbeat signal on said wireless link, said heartbeat signal periodically transmitted by said second device;
detecting absence of said heartbeat signal; and
responsive to said detecting, generating a user alarm, said user alarm being of said alarm type.

11. The method of claim 10 wherein said selecting said alarm type based on said notification type alarm type comprises selecting from a group of alarm types, said group including:
(a) an audible beep;
(b) an audible ringtone;
(c) a vibration; and
(d) a visual signal.

12. The method of claim 10 wherein said heartbeat signal comprises a cryptographically secure heartbeat signal and said method further comprises decrypting said heartbeat signal.

13. The method of claim 10 further comprising, responsive to said selecting said alarm type based on said notification type, setting an alarm type flag.

14. The method of claim 13 further comprising determining a value for said alarm type flag before said generating said user alarm.

15. A computer-readable medium containing computer-executable instructions that, when performed by a processor in a mobile communication device, cause said processor to carry out the method of any one of claims 10-14.

## Patentansprüche

1. System, das aufweist:
eine erste tragbare Vorrichtung;
eine zweite tragbare Vorrichtung, die ausgebildet ist zum drahtlosen Verbinden mit der ersten tragbaren Vorrichtung auf einer drahtlosen Verbindung, wobei die zweite tragbare Vorrichtung umfasst:
einen Hauptsteuerungs-CPU (100-106) der zweiten Vorrichtung, der konfiguriert ist zum:
Erfassen einer Änderung in einem Benutzerprofil, wobei das Benutzerprofil einen Benachrichtigungstyp spezifiziert;
Auswählen eines Alarmtyps basierend auf dem Benachrichtigungstyp;
Überwachen eines ersten Herzschlag- bzw. Heartbeat-Signals auf der drahtlosen Verbindung, wobei das erste Heartbeat-Signal regelmäßig durch die erste tragbare Vorrichtung übertragen wird;
Erfassen eines Fehlens des ersten Heartbeat-Signals; und
in Reaktion auf dieses Erfassen, Erzeugen einer Ausgabe, die für das Fehlen des ersten Heartbeat-Signals repräsentativ ist; und
eine Alarmerzeugungskomponente (100 - 116, 100-118) der zweiten Vorrichtung, die konfiguriert ist zum:
Empfangen der Ausgabe, die für das Fehlen des ersten Heartbeat-Signals repräsentativ ist; und
Erzeugen, in Reaktion auf das Empfangen, eines Benutzeralarms der zweiten Vorrichtung, wobei der Benutzeralarm den Alarmtyp hat.

2. System gemäß Anspruch 1, wobei das Auswählen des Alarmtyps basierend auf dem Benachrichtigungstyp aufweist ein Auswählen aus einer Gruppe von Alarmtypen, wobei die Gruppe umfasst:
(a) einen hörbaren Piepton;
(b) einen hörbaren Klingelton;
(c) eine Vibration; und
(d) ein visuelles Signal.

3. System gemäß Anspruch 1, wobei der Hauptsteuerungs-CPU (100-106) der zweiten Vorrichtung konfiguriert ist, ein Alarmtyp-Flag zu setzen in Reaktion auf das Auswählen des Alarmtyps basierend auf dem Benachrichtigungstyp.

4. System gemäß Anspruch 3, wobei die Alarmerzeugungskomponente (100-116, 100-118) der zweiten Vorrichtung weiter konfiguriert ist, einen Wert für das Alarmtyp-Flag zu bestimmen vor einem Erzeugen des Benutzeralarms der zweiten Vorrichtung.

5. System gemäß Anspruch 2, wobei die erste tragbare Vorrichtung aufweist:
einen Hauptsteuerungs-CPU (200-106) der ersten Vorrichtung, der konfiguriert ist zum:
Überwachen eines zweiten Heartbeat-Signals auf der drahtlosen Verbindung, wobei das zweite Heartbeat-Signal regelmäßig durch die zweite tragbare Vorrichtung übertragen wird;
Erfassen eines Fehlens des zweiten Heartbeat-Signals; und
in Reaktion auf das Erfassen des Fehlens des zweiten Heartbeat-Signals, Erzeugen einer Ausgabe, die für das Fehlen des zweiten Heartbeat-Signals repräsentativ ist; und
eine Alarmerzeugungskomponente (200-116, 200-118) der ersten Vorrichtung, die konfiguriert ist zum:
Empfangen der Ausgabe, die für das Fehlen des zweiten Heartbeat-Signals repräsentativ ist; und
Erzeugen, in Reaktion auf das Empfangen der Ausgabe, die für das Fehlen des zweiten Heartbeat-Signals repräsentativ, eines Benutzeralarms der ersten Vorrichtung.

6. System gemäß Anspruch 5, das weiter aufweist, an der ersten Vorrichtung, ein Empfangen einer Anzeige einer Benutzer-Auswahl für einen Alarmtyp für den Benutzeralarm der ersten Vorrichtung.

7. System gemäß Anspruch 6, wobei die Anzeige der Benutzer-Auswahl einen Alarmtyp aus der Gruppe von Alarmtypen spezifiziert.

8. System gemäß Anspruch 6, wobei der Hauptsteuerungs-CPU (200-106) der ersten Vorrichtung konfiguriert ist, ein Alarmtyp-Flag zu setzen in Reaktion auf das Empfangen der Anzeige der Benutzer-Auswahl für den Alarmtyp für den Benutzeralarm der ersten Vorrichtung.

9. System gemäß Anspruch 8, wobei die Alarmerzeugungskomponente (200-116, 200-118) der ersten Vorrichtung konfiguriert ist, einen Wert für das Alarm-Flag zu bestimmen vor dem Erzeugen des Benutzeralarms der ersten Vorrichtung.

10. Verfahren zum Vorsehen einer Verbindungs-Status-Anzeige, an einer ersten Vorrichtung, für eine drahtlose Verbindung zu einer zweiten Vorrichtung, wobei das Verfahren aufweist:
Erfassen einer Änderung in einem Benutzerprofil, wobei das Benutzerprofil einen Benachrichtigungstyp spezifiziert;
Auswählen eines Alarmtyps basierend auf dem Benachrichtigungstyp;
Überwachen eines Heartbeat-Signals auf der drahtlosen Verbindung, wobei das Heartbeat-Signal regelmäßig durch die zweite Vorrichtung übertragen wird;
Erfassen eines Fehlens des Heartbeat-Signals; und
in Reaktion auf das Erfassen, Erzeugen eines Benutzeralarms, wobei der Benutzeralarm den Alarmtyp hat.

11. Verfahren gemäß Anspruch 10, wobei das Auswählen des Alarmtyps basierend auf dem Benachrichtigungstyp ein Auswählen aus einer Gruppe von Alarmtypen aufweist, wobei die Gruppe umfasst:
(a) einen hörbaren Piepton;
(b) einen hörbaren Klingelton;
(c) eine Vibration; und
(d) ein visuelles Signal.

12. Verfahren gemäß Anspruch 10, wobei das Heartbeat-Signal ein kryptographisch sicheres Heartbeat-Signal aufweist und das Verfahren weiter ein Entschlüsseln des Heartbeat-Signals aufweist.

13. Verfahren gemäß Anspruch 10, das weiter aufweist, in Reaktion auf das Auswählen des Alarmtyps basierend auf dem Benachrichtigungstyp, Setzen eines Alarmtyp-Flags.

14. Verfahren gemäß Anspruch 13, das weiter aufweist Bestimmen eines Werts für das Alarmtyp-Flag vor dem Erzeugen des Benutzeralarms.

15. Computerlesbares Medium, das computerausführbare Anweisungen enthält, die bei Durchführung durch einen Prozessor in einer mobilen Kommunikationsvorrichtung den Prozessor veranlassen, das Verfahren gemäß einem der Ansprüche 10-14 auszuführen.

## Revendications

1. Système comprenant :
un premier dispositif portable ;
un second dispositif portable conçu pour se connecter sans fil audit premier dispositif portable sur une liaison sans fil, ledit second dispositif portable comportant :
une CPU de commande principale de second dispositif (100-106) configurée pour :
détecter un changement de profil d'utilisateur, ledit profil d'utilisateur spécifiant un type de notification ;
sélectionner un type d'alarme sur la base dudit type de notification ;
surveiller un premier signal de battement cardiaque sur ladite liaison sans fil, ledit premier signal de battement cardiaque étant périodiquement transmis par ledit premier dispositif portable ;
détecter l'absence dudit premier signal de battement cardiaque ; et
en réponse à ladite détection, générer une sortie représentative de ladite absence dudit premier signal de battement cardiaque ; et
un composant générateur d'alarme de second dispositif (100-116, 100-118) configuré pour :
recevoir ladite sortie représentative de ladite absence dudit premier signal de battement cardiaque ; et
générer, en réponse à ladite réception, une alarme d'utilisateur de second dispositif, ladite alarme d'utilisateur étant dudit type d'alarme.

2. Système selon la revendication 1, dans lequel ladite sélection dudit type d'alarme sur la base dudit type de notification consiste à effectuer une sélection dans un groupe de types d'alarme, ledit groupe comprenant :
(a) un bip audible ;
(b) une sonnerie audible ;
(c) une vibration ; et
(d) un signal visuel.

3. Système selon la revendication 1, dans lequel ladite CPU de commande principale de second dispositif (100-106) est configurée pour positionner un drapeau de type d'alarme en réponse à ladite sélection dudit type d'alarme sur la base dudit type de notification.

4. Système selon la revendication 3, dans lequel ledit composant générateur d'alarme de second dispositif (100-116, 100-118) est en outre configuré pour déterminer une valeur dudit drapeau de type d'alarme avant de générer ladite alarme d'utilisateur de second dispositif.

5. Système selon la revendication 2, dans lequel ledit premier dispositif portable comprend :
une CPU de commande principale de premier dispositif (200-106) configurée pour :
surveiller un second signal de battement cardiaque sur ladite liaison sans fil, ledit second signal de battement cardiaque étant périodiquement transmis par ledit second dispositif portable ;
détecter l'absence dudit second signal de battement cardiaque ; et
en réponse à ladite détection de ladite absence dudit second signal de battement cardiaque, générer une sortie représentative de ladite absence dudit second signal de battement cardiaque ; et
un composant générateur d'alarme de premier dispositif (200-116, 200-118) configuré pour :
recevoir ladite sortie représentative de ladite absence dudit second signal de battement cardiaque ; et
générer, en réponse à ladite réception de ladite sortie représentative de ladite absence dudit second signal de battement cardiaque, une alarme d'utilisateur de premier dispositif.

6. Système selon la revendication 5, consistant en outre, sur ledit premier dispositif, à recevoir une indication d'une sélection faite par l'utilisateur d'un type d'alarme pour ladite alarme d'utilisateur de premier dispositif.

7. Système selon la revendication 6, dans lequel ladite indication de ladite sélection par l'utilisateur spécifie un type d'alarme dans le groupe de types d'alarme.

8. Système selon la revendication 6, dans lequel ladite CPU de commande principale de premier dispositif (200-106) est configurée pour positionner un type de drapeau d'alarme en réponse à ladite réception de ladite indication de ladite sélection par l'utilisateur dudit type d'alarme pour ladite alarme d'utilisateur de premier dispositif.

9. Système selon la revendication 8, dans lequel ledit composant générateur d'alarme de premier dispositif (200-116, 200-118) est configuré pour déterminer une valeur dudit drapeau d'alarme avant que ladite alarme d'utilisateur de premier dispositif soit générée.

10. Procédé destiné à fournir une indication d'état de connexion, sur un premier dispositif, pour une liaison sans fil à un second dispositif, ledit procédé consistant à :
détecter un changement de profil d'utilisateur, ledit profil d'utilisateur spécifiant un type de notification ;
sélectionner un type d'alarme sur la base dudit type de notification ;
surveiller un signal de battement cardiaque sur ladite liaison sans fil, ledit signal de battement cardiaque étant périodiquement transmis par ledit second dispositif ;
détecter l'absence dudit signal de battement cardiaque ; et
en réponse à ladite détection, générer une alarme d'utilisateur, ladite alarme d'utilisateur étant dudit type d'alarme.

11. Procédé selon la revendication 10, dans lequel ladite sélection dudit type d'alarme sur la base dudit type de notification consiste à effectuer une sélection dans un groupe de types d'alarme, ledit groupe comprenant :
(a) un bip audible ;
(b) une sonnerie audible ;
(c) une vibration ; et
(d) un signal visuel.

12. Procédé selon la revendication 10, dans lequel ledit signal de battement cardiaque comprend un signal de battement cardiaque sécurisé de manière cryptographique et ledit procédé consiste en outre à décrypter ledit signal de battement cardiaque.

13. Procédé selon la revendication 10, consistant en outre, en réponse à ladite sélection dudit type d'alarme sur la base dudit type de notification, à régler un drapeau de type d'alarme.

14. Procédé selon la revendication 13, consistant en outre à déterminer une valeur dudit drapeau de type d'alarme avant que ladite alarme d'utilisateur soit générée.

15. Support lisible par ordinateur contenant des instructions exécutables sur ordinateur qui, lorsqu'elles sont mises en oeuvre par un processeur dans un dispositif de communication mobile, font en sorte que ledit processeur exécute le procédé de l'une quelconque des revendications 10 à 14.
